(19) Europäisches Patentamt
European Patent Office
Office européen des brevets

(11) **EP 4 212 555 B1**

(12) **EUROPEAN PATENT SPECIFICATION**

(45) Date of publication and mention
of the grant of the patent:
**24.12.2025 Bulletin 2025/52**

(21) Application number: **22877666.2**

(22) Date of filing: **19.09.2022**

(51) International Patent Classification (IPC):
*C08F 6/00* $^{(2006.01)}$   *B01J 19/00* $^{(2006.01)}$
*B01J 19/24* $^{(2006.01)}$   *C08F 2/01* $^{(2006.01)}$

(52) Cooperative Patent Classification (CPC):
(C-Sets available)
**C08F 6/003; B01J 19/0006; B01J 19/2465;
C08F 2/01;** B01J 2219/00164; B01J 2219/00173
(Cont.)

(86) International application number:
**PCT/KR2022/013997**

(87) International publication number:
**WO 2023/096120 (01.06.2023 Gazette 2023/22)**

(54) **SOLVENT RECIRCULATION SYSTEM**

LÖSUNGSMITTELRÜCKFÜHRUNGSSYSTEM

SYSTÈME DE RECIRCULATION DE SOLVANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2021 KR 20210164957
14.09.2022 KR 20220115830**

(43) Date of publication of application:
**19.07.2023 Bulletin 2023/29**

(73) Proprietor: **LG CHEM, LTD.
Yeongdeungpo-gu,
Seoul 07336 (KR)**

(72) Inventors:
• **LEE, Chan Hee
34122 Daejeon (KR)**
• **CHOI, Seung Won
34122 Daejeon (KR)**

(74) Representative: **Hoffmann Eitle
Patent- und Rechtsanwälte PartmbB
Arabellastraße 30
81925 München (DE)**

(56) References cited:
KR-A- 20180 095 453    KR-A- 20190 071 187
KR-A- 20200 059 840    US-A1- 2016 282 251
US-A1- 2016 318 001    US-A1- 2018 002 457

(52) Cooperative Patent Classification (CPC): (Cont.)

C-Sets
**C08F 6/003, C08L 23/0815**

**Description**

Technical Field

The present invention relates to a solvent recirculation system, and more particularly, a solvent recirculation system capable of calculating the composition of a feed stream supplied to a reactor of a polymerization process in real time when a solvent separated and recovered in the polymerization process is reused in the polymerization process.

[Background Art]

In the conventional polymer polymerization process, according to a method of preparing a reaction product containing a desired product, purifying the desired product from the reaction product, and separating, recovering, and reusing a solvent or the like used for polymerization, it is possible to reduce a raw material cost and improve price competitiveness of the product. A solvent recirculation system comprising a solvent vessel discharge line configured to convey a solvent stream discharged from a solvent vessel and connect the solvent vessel and a buffer vessel; a buffer vessel discharge line configured to convey a feed stream discharged from the buffer vessel; feed supply lines connected to the solvent vessel discharge line; a density meter provided upstream of a point where the one or more of the feed supply lines are connected; and a calculation part receiving information on measured values of the density meters and configured to predict a phase separation of the feed stream conveyed through the buffer vessel discharge line is described by US 2016/282251 A1.

A feed stream supplied to the reactor may include a solvent and a raw material component, and the solvent may include a fresh solvent and a recycled solvent separated and recovered in the polymerization process. In this case, since it is difficult to measure a composition of the solvent recycled in the polymerization process, there is a problem in that it is also difficult to ascertain the composition of the feed stream supplied to the reactor of the polymerization process.

Therefore, conventionally, the composition of the feed stream is not ascertained by the measured value of the feed stream. That is, conventionally, the composition of the feed stream is ascertained by calculation through an equation of state and a mass balance in combination of information on a conversion rate, a temperature, a pressure, and heat removal conditions of the reactor, and ambient information such as information on a post-process flow rate, a temperature, a pressure, a residence time, a level, and an operating condition information of a rotating device. However, since the sensitivity of the theory and the margin of error according to the assumptions are large, and the composition of the feed stream is calculated using the ambient information, it is difficult to measure an extent to which changes applied to the polymerization process are reflected to the circulation unit in real time, and it is difficult to apply when the process does not converge.

[Disclosure]

[Technical Problem]

The present invention is made to solve the problems mentioned in the technology that is the background of the invention, and an object thereof is to provide a solvent recirculation system capable of optimizing production conditions of a polymer by calculating a composition of a feed stream supplied to a reactor of the polymerization process in real time when a solvent separated and recovered in the polymerization process is reused in the polymerization process.

[Technical Solution]

In order to achieve the object, according to an aspect of the present invention, there is provided a solvent recirculation system including: a solvent vessel discharge line configured to convey a solvent stream discharged from a solvent vessel and connect the solvent vessel and a buffer vessel; a buffer vessel discharge line configured to convey a feed stream discharged from the buffer vessel; one or more of feed supply lines connected to the solvent vessel discharge line; a density meter provided at downstream of a point where the one or more of the feed supply lines are connected, wherein each of the feed supply lines and the buffer vessel discharge line includes a mass flow meter; and a calculation part receiving information on a measured value of the density meter and the mass flow meters and configured to predict a composition of the feed stream conveyed through the buffer vessel discharge line using an equation of state and a mass balance.

[Advantageous Effects]

According to the solvent recirculation system of the present invention, a composition of the entire process can be estimated by calculating the composition of the feed stream containing the recycled solvent in real time, and tracing the composition of the recycled solvent back through the calculation.

In addition, by estimating the composition of the feed stream in real time, it is possible to optimize the polymer production conditions to shorten a start-up, a grade change, and a shut-down period.

[Brief Description of Drawings]

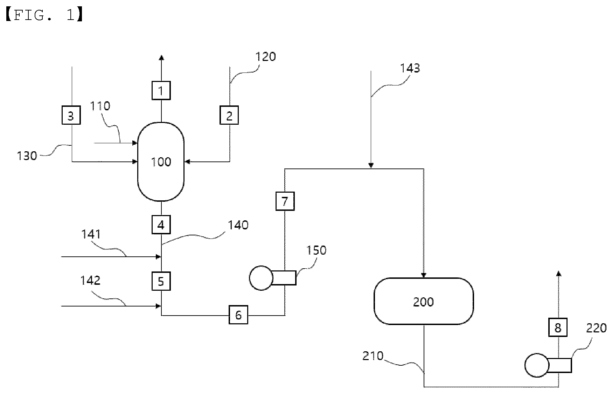

FIG. 1 illustrates a process operated according to a solvent recirculation system of one embodiment according to the present invention.

[Best Mode]

The terms or words used in the description and claims of the present invention should not be construed as being limited to their ordinary or dictionary meanings, and should be interpreted with a meaning and concept consistent with a technical idea of the present invention, based on the principle that the inventor can appropriately define the concept of the term in order to best describe his/her invention.

In the present invention, the term "stream" may mean a flow of a fluid in a process, and may also mean a fluid itself flowing in a line (pipe). Specifically, the "stream" may mean both the fluid itself and the flow of the fluid flowing within a line connecting each device. In addition, the fluid may include any one or more components of a gas, a liquid, and a solid.

Meanwhile, in the present invention, a "rear end" may mean downstream of a specific point, and a "front end" may mean upstream of a specific point. For example, a "rear end" of a buffer vessel may mean a downstream discharged from the buffer vessel, and an "upper end" of the buffer vessel may mean an upstream introduced into the buffer vessel.

Hereinafter, the present invention will be described in more detail with reference to FIG. 1 to help the understanding of the present invention.

According to the present invention, a solvent recirculation system is provided. More specifically, there is provided a solvent recirculation system including a solvent vessel discharge line 140 configured to convey a solvent stream discharged from a solvent vessel 100 and connect the solvent vessel 100 and a buffer vessel 200, a buffer vessel discharge line 210 configured to convey a feed stream discharged from the buffer vessel 200, one or more of feed supply lines connected to the solvent vessel discharge line 140, a density meter provided at a rear end of a point where the one or more of the feed supply lines are connected, and a calculation part receiving information on measured values of the density meter and a mass flow meter and configured to predict a composition of the feed stream conveyed through the discharge line of the buffer vessel 200, in which each of the feed supply lines and the buffer vessel discharge line 210 includes the mass flow meter.

A polymerization process of the polymer may include a preparation step and a post-processing step. Specifically, the preparation step may be a step of preparing a reaction product containing a desired product by supplying a feed stream to a reactor, and the post-processing step is a step of purifying the desired product from the reaction product and separating and recovering a solvent or the like used for polymerization.

The reactor may be a continuously stirred tank reactor (CSTR), a plug flow reactor (PFR), or a loop reactor. Meanwhile, the polymerization process of the polymer is a process of generating polyolefin by polymerizing a monomer in a solvent, and the solvent may be a fresh solvent or a mixture including paraffin, isoparaffin, and naphtanic. Meanwhile, the monomer may include an alpha-olefin having 2 to 10 carbon atoms.

Meanwhile, the reaction product may be discharged from the reactor and undergo a post-processing step of separating and purifying the desired product, for example, polyolefin from unreacted monomers and a solvent. That is, the post-processing step may include a process of separating unreacted monomers and solvents as light components and polyolefin as heavy components through a separator, and recovering the unreacted monomers and solvents. Here, the separator may be a gas-liquid separator or a liquid-liquid separator. The gas-liquid separator may be, for example, a devolatilizer such as a flash device.

When the separator is a gas-liquid separator, a stream discharged from the upper portion of the gas-liquid separator may include a solvent, and the upper discharge stream may pass through a heat exchanger and a buffer vessel for condensation, if necessary. The solvent recovered from the upper discharge stream may be liquid or gaseous. In this case, the recovered liquid solvent and gaseous solvent may be recirculated to the solvent vessel 100 through a liquid solvent recirculation line 120 and a gas solvent recirculation line 130.

Meanwhile, when the separator is the liquid-liquid separator, the solvent is discharged from an upper part of the liquid-liquid separator in a liquid state. In this case, the recovered liquid solvent may be recirculated to the solvent vessel 100 through the liquid solvent recirculation line 120.

Therefore, the solvent recovered in the post-processing step may include one or more of a gas solvent and a liquid solvent, and the solvent vessel 100 may include one or more of the liquid solvent recirculation line 120 and the gas solvent recirculation line 130 to receive one or more of the gas solvent and the liquid solvent recovered in the post-processing step.

In this case, since a composition of the solvent recovered in the post-processing step is continuously affected by a load, a type of the monomer, and operating conditions of the separator that separates the solvent in the post-processing step, it is difficult to ascertain the composition in real time. Moreover, when the solvent recovered in the post-processing step is included as the solvent of the feed stream supplied to the reactor of the preparation step, it is also difficult to ascertain the composition of the feed stream.

Therefore, conventionally, the composition of the feed stream is not ascertained by the measured value of the feed stream. That is, conventionally, the composition of the feed stream is ascertained by calculation through an equation of state and a mass balance in combination of information on a conversion rate, a temperature, a pressure, and heat removal conditions of the reactor, and ambient information such as information on a post-process flow rate, a temperature, a pressure, a residence time, a level, and an operating condition information of rotating device. However, since an error range is large due to the assumption of phase separation and reaction and the composition of the feed stream is calculated using the ambient information, it is difficult to measure an extent to which changes applied to the polymerization process are reflected to the circulation unit in real time, and it is difficult to apply when the process does not converge.

In contrast, in the present invention, by calculating the composition of the feed stream in real time using the solvent recirculation system, it is possible to shorten a start-up, a grade change, and a shut-down period. Moreover, it is possible to provide a solvent recirculation system capable of optimizing the production conditions of polymers by tracing the composition of the recycled solvent back and estimating the composition of the entire process through mass balance.

The solvent vessel 100 may further include a solvent vessel supply line 110 in addition to the liquid solvent recirculation line 120 and the gas solvent recirculation line 130. The solvent vessel supply line 110 may include one or more of a solvent and a monomer supplied to the reactor through the solvent vessel 100 and a buffer vessel 200 to be described later. In this case, the solvent feed supply line 110 may include a mass flow meter, and the mass flow meter may transmit a measured value of a mass flow rate of the fresh solvent supplied through the solvent feed supply line 110 to a calculation part. The fresh solvent may be appropriately selected depending on the desired product in the polymerization process.

An off-gas discharge line for discharging off-gas in the solvent vessel 100 may be provided at an upper portion of the solvent vessel 100.

The solvent vessel 100 may include a thermometer and a pressure gauge. Specifically, the thermometer and pressure gauge may measure the temperature and pressure of the solvent vessel 100, and measured values of the thermometer and pressure gauge provided in the solvent vessel 100 may mean the temperature and pressure of the solvent stream discharged from the solvent vessel 100.

According to one embodiment of the present invention, the solvent vessel discharge line 140 may be provided in a lower portion of the solvent vessel 100. That is, a liquid solvent stream containing the solvent present in the solvent vessel 100, for example, the solvent and the fresh solvent recovered in the post-processing step is discharged and conveyed through the solvent discharge line 140, and the solvent vessel discharge line 140 connects the solvent vessel 100 and the buffer vessel 200.

One or more of the feed supply lines may be connected to the solvent vessel discharge line 140. Specifically, the component conveyed through the feed supply line may include one or more of a monomer and a solvent for preparing the desired product in the polymer polymerization process. Therefore, it is possible to form the feed stream supplied to the reactor through the buffer vessel 200 to be described later. In addition, the number of feed supply lines may be the same as the number of monomer components required to prepare the desired product in the polymerization process.

A density meter may be provided at the rear end of the point where the one or more of the feed supply lines are connected. Specifically, the density meter is provided at the rear end of the point where the feed supply line is connected, and the density meter may measure a density of a stream in which the solvent stream conveyed through the solvent vessel discharge line 140 and the monomer component conveyed through the feed supply line are mixed and transmit the density to the calculation part.

When two or more feed supply lines are connected to the solvent vessel discharge line 140, the density meter may be provided in all or a part of the point between the two or more feed supply lines connected and the buffer vessel discharge stream 210. For example, the density meter may be provided between two or more feed supply lines connected to the solvent vessel discharge line 140, and the density meter provided at the rear end of the point where the feed supply line located the rearmost end is connected may be provided in the buffer vessel discharge line 210.

Here, as the point at which the density meter is located, the rear end of the point where each feed supply line is connected may mean a portion between a point where the feed supply line joins the solvent vessel discharge line 140 or the buffer vessel discharge line 210, and a point at which another subsequent feed supply line after the feed supply line joins the solvent vessel discharge line 140 or the buffer vessel discharge line 210.

By providing a density meter as described above, it is possible to measure the density for each section where new components are joined to the solvent stream, and accordingly, the composition of the feed stream can be more precisely calculated.

As an example, when using two monomers in the polymerization process of the polymer, a first feed supply line

141 and a second feed supply line 142 may be connected to the solvent vessel discharge line 140, the density meter may be provided between a point where the first feed supply line 141 is connected to the solvent vessel discharge line 140 and a point where the second feed supply line 142 is connected to the solvent vessel discharge line 140, and the density meter may be provided in the buffer vessel discharge line 210.

As another example, when using three monomers in the polymerization process of the polymer, the first feed supply line 141, the second feed supply line 142, and a third feed supply line 143 may be connected to the solvent vessel discharge line 140, the density meter may be provided between the point where the first feed supply line 141 is connected to the solvent vessel discharge line 140 and the point where the second feed supply line 142 is connected to the solvent vessel discharge line 140, the density meter may be provided between the point where the second feed supply line 142 is connected to the solvent vessel discharge line 140 and a point where the third feed supply line 143 is connected to the solvent vessel discharge line 140, and the density meter may be provided in the buffer vessel discharge line 210, respectively.

Each one or more of the feed supply lines include a mass flow meter. The mass flow meter may measure the mass flow rate of the monomer component conveyed through each feed supply line and transmit the measured value to a calculation part.

A thermometer and a pressure gauge may be provided at the front end and the rear end of the point where the feed supply line of the rearmost end of the solvent vessel discharge line 140 is connected, respectively. Specifically, the thermometer and the pressure gauge may be provided at the front end of the point where the feed supply line of the rearmost end in the solvent vessel discharge line 140 is connected and the buffer vessel discharge line 210. Accordingly, it is possible to measure the temperature and pressure of the stream at the front and rear ends of the point where the feed supply line of the rearmost end is connected, and transmit the measured values to the calculation part.

The solvent vessel discharge line 140 connects the solvent vessel 100 and the buffer vessel 200, and a heat exchanger may be further provided between the point where the feed supply line of the rearmost end in the solvent vessel discharge line 140 is connected and the buffer vessel 200. The heat exchanger may be for completely dissolving the monomer component supplied through one or more of the feed supply lines in the solvent stream conveyed through the solvent vessel discharge line 140, and when the monomer component is maintained in a liquid phase, the heat exchange can increase accuracy when the calculation part calculates the composition of the feed stream.

The solvent vessel discharge line 140 may be provided with a pump 150. The pump 150 increases the pressure to a lower pressure than the pressure of the feed supply line 143 at the rearmost end, thereby conveying the solution and forming a reaction pressure. For example, the pump 150 may be installed at the front end of the point where the feed supply line of the rearmost end in the solvent vessel discharge line 140 is connected, and may transmit the measured values of the thermometer, the pressure gauge, a viscometer, and a mass flowmeter at the rear end of the pump 150 to the calculation part.

The buffer vessel 200 may include a thermometer and a pressure gauge like the solvent vessel 100. Specifically, the thermometer and pressure gauge can measure the temperature and pressure of the buffer vessel 200, and the measured values of the thermometer and pressure gauge provided in the buffer vessel 200 may mean the temperature and pressure of the feed stream discharged from the buffer vessel 200.

According to one embodiment of the present invention, the buffer vessel 200 may include the buffer vessel discharge line 210 for discharging and conveying a feed stream in which a solvent stream and a monomer component are mixed. The buffer vessel discharge line 210 may be connected to the reactor of the polymer polymerization process to supply the feed stream to the reactor.

The buffer vessel discharge line 210 may include a mass flow meter. The mass flow meter may measure the mass flow rate of the feed stream conveyed through the buffer vessel discharge line 210 and transmit the measured value to the calculation part.

A pump 220 may also be provided in the buffer vessel discharge line 210. The pump 220 may be installed at the front end of the point where the mass flow meter is installed, thereby determining the final pressure of the reactor.

According to one embodiment of the present invention, the solvent recirculation system may include a calculation part for calculating the composition of the feed stream by receiving the measured values of the density meter and the mass flow meter provided in the solvent recirculation system. Specifically, the calculation part may receive information on the measured value of each of the density meter and the mass flow meter, and calculate the composition of the feed stream conveyed through the discharge line of the buffer vessel using an equation of state and a mass balance of the steady state. In addition, the calculation part can be used to calculate the composition of the feed stream by receiving the measured values of the thermometer and pressure gauge provided in the solvent recirculation system.

In one embodiment of the present invention, the calculation part may calculate the composition of the feed stream supplied to the reactor of the preparation step through the mass balance using the measured values of the mass flow rate transmitted.

As an example, the process of calculating the composition of the feed stream using the solvent recirculation system according to the present invention in a polymer polymerization process using a solvent and two monomer components can be described as an example.

Specifically, when the solvent is referred to as s, the monomer component conveyed through the first feed supply line 141 is referred to as m1, the monomer component conveyed through the second feed supply line 142 is referred to as m2, the feed stream conveyed through the discharge line of the buffer vessel 200 is referred to as an eighth stream, and the stream conveyed through the solvent vessel discharge line 140 between the pump 150 and the point where the third feed supply line 143 is connected is referred to as a seventh stream, a composition of m2 in the eighth stream may be expressed as $x_{m2}$, a composition of m1 may be expressed as $x_{m1}$, and a composition of s may be expressed as $x_s$, and in this case, since the sum of the compositions of m1, m2 and the solvent is 1, $x_s$ may be expressed as $1-x_{m1}-x_{m2}$.

In addition, the composition of m2 in the seventh stream may be expressed as $x'_{m2}$, the composition of m1 may be expressed as $x'_{m1}$, and the composition of s may be expressed as $x'_s$, and the composition of the seventh stream may be expressed as the following Relational Expression 1 by a mass balance with the m2 stream before joining the eighth stream.

[Relational Expression 1]

$$m_7 = (m_{m2} - m_{Fm2}) + m_{m1} + m_s$$

$$1 = \frac{(m_{m2} - m_{Fm2})}{m_7} + \frac{(m_{m1})}{m_7} + \frac{(m_s)}{m_7}$$

$$1 = \frac{(m_8 x_{m2} - m_{Fm2})}{m_7} + \frac{(m_8 x_{m1})}{m_7} + \frac{(m_8(1 - x_{m2} - x_{m1}))}{m_7}$$

$$\Longrightarrow$$

$$x'_{m2} = \frac{(m_8 x_{m2} - m_{Fm2})}{m_7}$$

$$x'_{m1} = \frac{(m_8 x_{m1})}{m_7}$$

$$x'_s = \frac{(m_8(1 - x_{m2} - x_{m1}))}{m_7}$$

In Relational Expression 1, $m_7$ is a total mass flow rate of the seventh stream, $m_8$ is a total mass flow rate of the eighth stream, $m_{m2}$ is a mass flow rate of m2 in the eighth stream, $m_{m1}$ is a mass flow rate of m1 in the eighth stream, $m_s$ is a mass flow rate of the solvent s in the eighth stream, and $m_{Fm2}$ is a total mass flow rate of the Fresh m2 stream. As such, the composition of m1, m2 and solvent s in the seventh stream may be expressed as a function of the eighth stream.

Meanwhile, the mass density may be expressed by the following Relational Expression 2 through the relational expressions of a molar volume and the average molecular weight (mw) calculated through the equation of state.

[Relational Expression 2]

$$\rho \left[ \frac{kg}{m^3} \right] = \frac{mw \left[ \frac{kg}{mol} \right]}{V \left[ \frac{m^3}{mol} \right]} = \frac{mw}{\frac{ZRT}{P}}$$

In Relational Expression 2, $\rho$ is a mass density, mw is an average molecular weight, Z is a compressibility factor, T is a temperature, P is a pressure, and R is a gas constant.

In this case, mw is a function of composition, Z is a function of composition and temperature calculated by the equation of state, and since the composition of the seventh stream can be expressed by substituting the composition of the eighth stream by Relational Expression 1, each stream can be expressed by an equation in Relational expression 3 below.

[Relational Expression 3]

$$\rho_7 = \frac{mw'(x_{m2}, x_{m1})}{\dfrac{RT_7}{P_7} Z'(x_{m2}, x_{m1}, T_7)}$$

$$\rho_8 = \frac{mw(x_{m2}, x_{m1})}{\dfrac{RT_8}{P_8} Z(x_{m2}, x_{m1}, T_8)}$$

In Relational Expression 3, $\rho_7$ is the mass density of the seventh stream, $\rho_8$ is the mass density of the eighth stream, mw is the average molecular weight of the eighth stream, mw' is the average molecular weight of the seventh stream, Z is the compressibility factor of the eighth stream and is a function of the composition and temperature calculated by equation of state, Z' is the compressibility factor of the seventh stream and is a function of the composition and temperature calculated by the equation of state, $T_8$ is the temperature of the eighth stream, $T_7$ is the temperature of the seventh stream, $P_8$ is the pressure of the eighth stream, $P_7$ is the pressure of the seventh stream, $x_{m2}$ is the composition of m2, $x_{m1}$ is the composition of m1, and R is the gas constant.

Since the temperature, pressure, and density values are measured in the seventh stream and the eighth stream, in order to obtain the composition of m2 and the composition of m1, the two equations in Relational Expression 3 can be combined to obtain a solution. In this way, the m2 composition and the m1 composition of the eighth stream are obtained through Relational Expressions 1 to 3, and accordingly, the composition of s can be obtained.

In addition, through the composition of the eighth stream, the composition of the solvent finally recovered in the post-processing step may be inversely calculated by inversely calculating the stream composition at the front end of the point where each feed supply line is connected.

The calculation method in this calculation part can be applied in the same way according to the number of feed supply lines, that is, the number of monomer components required in the polymerization process.

Through the composition of the feed stream calculated in the calculation part and the composition of the solvent recovered in the post-processing step, the flow rate of the monomer component conveyed through the feed supply line and the operating conditions of the reactor are controlled to minimize off-grade products and perform an effective separation process operation, and thus, it is possible to optimize the production conditions of the polymer.

As described above, the solvent recirculation system according to the present invention has been illustrated in the description and drawings, but the description and drawings are described and illustrated only the essential components for understanding the present invention, and in addition to the process and apparatus illustrated in the above description and drawings, processes and apparatus not separately described and not illustrated may be appropriately applied and used to implement the solvent recirculation system according to the present invention. For the composition prediction of Examples, the same Perturbed chain statistical associating fluid theory (PC-SAFT) equation of state was used.

Hereinafter, the present invention will be described in more detail by way of Examples. However, the following examples are intended to illustrate the present invention, and it is apparent to those skilled in the art that various changes and modifications are possible within the scope and spirit of the present invention, and the scope of the present invention is not limited thereto.

**Examples and Comparative Examples**

**Comparative Example 1**

As in the process flow chart illustrated in FIG. 1, the solvent recirculation system was operated.

Specifically, fresh hexane (Fresh C6) was supplied to the solvent vessel 100 through the solvent vessel supply line 110 and solvents and monomers recovered in the polyolefin polymerization process through the liquid solvent recirculation line 120 and the gas solvent recirculation line 130 were not supplied. In this case, a thermometer and a pressure gauge were installed in the solvent vessel 100, and a mass flow meter was installed in the solvent vessel supply line 110.

The solvent stream was conveyed through the solvent vessel discharge line 140 installed in the lower portion of the solvent vessel 100, the octene (Fresh C8) was supplied through the first feed supply line 141 connected to the solvent vessel discharge line 140, butene (Fresh C4) was not supplied through the second feed supply line 142, ethylene (Fresh C2) was supplied through the third feed supply line 143. In this case, a mass flow meter was installed in the first feed supply line 141 to the third feed supply line 143.

The heat exchanger was installed in the solvent vessel discharge line 140 at the rear end of the point where the third feed supply line 143 was connected, and the stream containing the hexene, octene, and ethylene was heat-exchanged, and then supplied to the buffer vessel 200.

The feed stream was conveyed through a buffer vessel discharge line 210 installed in the lower portion of the buffer vessel 200, and the feed stream was supplied to the reactor of the polyolefin polymerization process. In this case, the pressure gauge and the thermometer were installed in the buffer vessel discharge line 210.

Mass fractions of hexene (C6), octene (C8), butene (C4) and ethylene (C2) in the eighth stream and seventh stream are illustrated in Table 1 below.

## Comparative Example 2

Comparative Example 2 was carried out in the same manner as in Comparative Example 1, except that the solvent and monomer recovered in the polyolefin polymerization process were supplied through the liquid solvent recirculation line 120 and the gas solvent recirculation line 130, and the flow rates of Fresh C6, Fresh C8, and Fresh C2 supplied through the solvent vessel supply line 110 and the first feed supply line 141 to the third feed supply line 143 were controlled in Comparative Example 1.

## Comparative Example 3

Comparative Example 3 was carried out in the same manner as in Comparative Example 1, except that the flow rates of Fresh C6 and Fresh C2 supplied through the solvent vessel supply line 110 and the third feed supply line 143 were different, and Fresh C4 was fed through the second feed supply line 142 instead of Fresh C8 in Comparative Example 1. In addition, the mass fractions of hexene (C6), octene (C8), butene (C4) and ethylene (C2) in the eighth stream and seventh stream are illustrated in Table 1 below.

## Comparative Example 4

Comparative Example 4 was carried out in the same manner as in Comparative Example 3, except that the solvent and monomer recovered from the polyolefin polymerization process were supplied through the liquid solvent recirculation line 120 and the gas solvent recirculation line 130, and the flow rates of Fresh C6, Fresh C4, and Fresh C2 supplied through the solvent vessel supply line 110, the second feed supply line 141 andto the third feed supply line 143 were controlled in Comparative Example 3.

## Example 1

As in the process flow chart illustrated in Figure 1, the solvent recirculation system was operated.

Specifically, fresh hexane (Fresh C6) was supplied to the solvent vessel 100 through the solvent vessel supply line 110, and the mixture of the solvent and the monomer recovered in the polyolefin polymerization process through the liquid solvent recirculation line 120 and the gas solvent recirculation line 130 was not supplied. In this case, the thermometer and the pressure gauge were installed in the solvent vessel 100, and the mass flow meter was installed in the solvent vessel supply line 110.

The solvent stream was conveyed through the solvent vessel discharge line 140 installed in the lower portion of the solvent vessel 100, the octene (Fresh C8) was supplied through the first feed supply line 141 connected to the solvent vessel discharge line 140, butene (Fresh C4) was not supplied through the second feed supply line 142, and ethylene (Fresh C2) was supplied through the third feed supply line 143. In this case, the mass flow meter was installed in the first feed supply line 141 to the third feed supply line 143, the density mater was installed between the first feed supply line 141 and the second feed supply line 142 and the density meter was installed between the second feed supply line 142 and the third feed supply line 143.

The heat exchanger was installed in the solvent vessel discharge line 140 at the rear end of the point where the third feed supply line 143 was connected, and the stream containing the hexene, octene, and ethylene was heat-exchanged, and then supplied to the buffer vessel 200.

The feed stream was conveyed through a buffer vessel discharge line 210 installed in the lower portion of the buffer vessel 200, and the feed steam was supplied to the reactor of the polyolefin polymerization process. In this case, the pressure gauge, the thermometer, and the density meter were installed in the buffer vessel discharge line 210.

In addition, the flow rates of Fresh C6, Fresh C8, and Fresh C2 supplied through the solvent vessel supply line 110, the first feed supply line 141 and the third feed supply line 143 were controlled as in Comparative Example 1.

The measured values from the thermometer, pressure gauge, the density meter, and the mass flow meter were transferred to the calculation part (not illustrated). In the calculation part, the mass balance and equation of state were combined and applied through Relational Expressions 1 to 3, the mass fractions of hexene (C6), octene (C8), butene (C4), and ethylene (C2) in the eighth stream and the seventh stream were calculated, and the results are illustrated in Table 1 below.

### Example 2

Example 2 was carried out in the same manner as in Example 1, except that, in Example 1, the solvent and monomer recovered in the polyolefin polymerization process were supplied through the liquid solvent recirculation line 120 and the gas solvent recirculation line 130, and the flow rates of Fresh C6, Fresh C8, and Fresh C2 supplied through the solvent vessel supply line 110, the first feed supply line 141 and the third feed supply line 143 were controlled in the same manner as in Comparative Example 2.

The measured values from the thermometer, pressure gauge, the density meter, and the mass flow meter were transferred to the calculation part (not illustrated). In the calculation part, the mass balance and equation of state were combined and applied through Relational Expressions 1 to 3, the mass fractions of hexene (C6), octene (C8), butene (C4), and ethylene (C2) in the eighth stream and the seventh stream were calculated, and the results are illustrated in Table 1 below.

### Example 3

Example 3 was carried out in the same manner as in Example 1, except that the flow rates of Fresh C6 and Fresh C2 supplied through the solvent vessel supply line 110 and the third feed supply line 143 were different, and Fresh C4 was fed through the second feed supply line 142 instead of Fresh C8 in Example 1. The measured values from the thermometer, pressure gauge, the density meter, and the mass flow meter were transferred to the calculation part (not illustrated). In the calculation part, the mass balance and equation of state were combined and applied through Relational Expressions 1 to 3, the mass fractions of hexene (C6), octene (C8), butene (C4), and ethylene (C2) in the eighth stream and the seventh stream were calculated, and the results are illustrated in Table 1 below.

### Example 4

Example 4 was carried out in the same manner as in Example 3, except that the solvent and monomer recovered in the polyolefin polymerization process were supplied through the liquid solvent recirculation line 120 and the gas solvent recirculation line 130, and the flow rates of Fresh C6, Fresh C4, and Fresh C2 supplied through the solvent vessel supply line 110 and the second feed supply line 141 to the third feed supply line 143 were controlled in Example 3.

The measured values from the thermometer, pressure gauge, the density meter, and the mass flow meter were transferred to the calculation part (not illustrated). In the calculation part, the mass balance and equation of state were combined and applied through Relational Expressions 1 to 3, the mass fractions of hexene (C6), octene (C8), butene (C4), and ethylene (C2) in the eighth stream and the seventh stream were calculated, and the results are illustrated in Table 1 below.

[Table 1]

|  | Comparative Example | | | | Example | | | |
|---|---|---|---|---|---|---|---|---|
|  | 1 | 2 | 3 | 4 | 1 | 2 | 3 | 4 |
| Fresh C6 (kg/hr) | 68.26 | 0.00 | 81.53 | 8.81 | 68.26 | 0.00 | 81.53 | 8.81 |
| Fresh C8 (kg/hr) | 22.86 | 13.13 | 0.00 | 0.00 | 22.86 | 13.13 | 0.00 | 0.00 |
| Fresh C4 (kg/hr) | 0.00 | 0.00 | 34.41 | 7.96 | 0.00 | 0.00 | 34.41 | 7.96 |
| Fresh C2 (kg/hr) | 19.37 | 16.86 | 27.66 | 21.84 | 19.37 | 16.86 | 27.66 | 21.84 |

## EP 4 212 555 B1

(continued)

| | | Comparative Example | | | | Example | | | |
|---|---|---|---|---|---|---|---|---|---|
| | | 1 | 2 | 3 | 4 | 1 | 2 | 3 | 4 |
| Seventh stream | Pressure ($Kg/cm^2g$) | 50.00 | 50.00 | 50.00 | 50.00 | 50.00 | 50.00 | 50.00 | 50.00 |
| | Temperature (°C) | 37.24 | 34.15 | 36.85 | 34.17 | 37.24 | 34.15 | 36.85 | 34.17 |
| | C2 (mass fraction) | 0.000 | - | 0.000 | - | 0.000 | 0.027 | 0.00 | 0.03 |
| | C4 (mass fraction) | 0.000 | - | 0.296 | - | 0.000 | 0.000 | 0.30 | 0.35 |
| | C8 (mass fraction) | 0.251 | - | 0.002 | - | 0.25 | 0.244 | 0.00 | 0.00 |
| | C6 (mass fraction) | 0.0749 | - | 0.702 | - | 0.735 | 0.728 | 0.70 | 0.62 |
| | Flow rate (kg/hr) | 110.5 | 110.4 | 143.8 | 143.5 | 110.5 | 110.4 | 143.8 | 143.5 |
| Eighth stream | Pressure ($Kg/cm^2g$) | 100.0 | 100.0 | 100.0 | 100.0 | 100.0 | 100.0 | 100.0 | 100.0 |
| | Temperature (°C) | 48.97 | 48.97 | 49.73 | 49.73 | 48.97 | 48.97 | 49.73 | 49.73 |
| | C2 (mass fraction) | 0.175 | - | 0.193 | - | 0.175 | 0.176 | 0.19 | 0.18 |
| | C4 (mass fraction) | 0.00 | - | 0.240 | - | 0.000 | 0.000 | 0.24 | 0.30 |
| | C8 (mass fraction) | 0.207 | - | 0.001 | - | 0.218 | 0.207 | 0.00 | 0.00 |
| | C6 (mass fraction) | 0.618 | - | 0.566 | - | 0.607 | 0.617 | 0.57 | 0.52 |
| RMSE (Root Mean Square Error) | | 0.0000 | - | 0.0000 | - | 0.0080 | - | 0.0013 | - |

In Table 1, in Example 1 with respect to the composition of the eighth stream, RMSE represents the root mean square error value of the calculated value compared to the measured value in Comparative Example 1, and in Example 3, RMSE represents the root mean square error value of the calculated value compared to the measured value in Comparative Example 3.

Referring to Table 1, in the case of Comparative Example 1 and Example 1, and Comparative Example 3 and Example 3, the recovered solvent was not used, in both cases, the compositions of the eighth stream and the seventh stream were calculated using the solvent recirculation system according to the present invention. As a result, it was confirmed that RMSE appeared as low as 0.008 when using Fresh C8 monomer (Example 1), and 0.0013 when using Fresh C4 monomer (Example 3).

In addition, in Comparative Example 2 and Example 4, the recovered solvent was used, it was impossible to measure the eighth stream, and thus, it was impossible to inversely calculate the composition of the seventh stream or the recovered solvent. In comparison, in the case of Example 2 and Example 4, it was possible to calculate the composition of the eighth stream using the solvent recirculation system according to the present invention, and thus, the inverse calculation of the composition of the seventh stream or the composition of the recovered solvent was possible. Such a model for predicting the composition of the recycle solvent can be improved through the accumulation of operating data, and the model can be used universally in a process in which the feed is liquid.

## Claims

1. A solvent recirculation system comprising:

a solvent vessel discharge line (140) configured to convey a solvent stream discharged from a solvent vessel (100) and connect the solvent vessel (100) and a buffer vessel (200);
a buffer vessel discharge line (210) configured to convey a feed stream discharged from the buffer vessel (200);
one or more of feed supply lines (141, 142, 143) connected to the solvent vessel discharge line (140);
a density meter provided at downstream of a point where the one or more of the feed supply lines (141, 142, 143) are connected,
wherein each of the feed supply lines (141, 142, 143) and the buffer vessel discharge line (210) includes a mass flow meter; and
a calculation part receiving information on measured values of the density meter and the mass flow meters and configured to predict a composition of the feed stream conveyed through the buffer vessel discharge line (210) using an equation of state and a mass balance.

2. The solvent recirculation system of claim 1, wherein two or more feed supply lines (141, 142, 143) are connected to the solvent vessel discharge line (140), and
the density meter is provided at all or a part of the sections between the points where the two or more feed supply lines (141, 142, 143) are connected and in the buffer vessel discharge line (210).

3. The solvent recirculation system of claim 1, wherein the solvent vessel (100) includes one or more of a liquid solvent recirculation line (120) and a gas solvent recirculation line (130).

4. The solvent recirculation system of claim 1, wherein the solvent vessel (100) includes a solvent vessel supply line (110) and the solvent vessel supply line (110) includes the mass flow meter.

5. The solvent recirculation system of claim 1, wherein the solvent vessel (100) includes a thermometer and a pressure gauge.

6. The solvent recirculation system of claim 1, wherein the density meter provided at downstream of a point where the feed supply line (141, 142, 143) located at a rearmost end among the one or more of the feed supply lines (141, 142, 143) is connected is provided in the buffer vessel discharge line (210).

7. The solvent recirculation system of claim 1, wherein the solvent vessel discharge line (140) includes a first feed supply line (141) and a second feed supply line (142), and
the density meter is installed between a point where the first feed supply line (141) is connected to the solvent vessel discharge line (140) and a point where the second feed supply line (142) is connected to the solvent vessel discharge line (140), and the density meter is installed in the buffer vessel discharge line (210).

8. The solvent recirculation system of claim 1, wherein the solvent vessel discharge line (140) includes a first feed supply line (141), a second feed supply line (142), and a third feed supply line (143), and
the density meter is installed between a point where the first feed supply line (141) is connected to the solvent vessel discharge line (140) and a point where the second feed supply line (142) is connected to the solvent vessel discharge line (140), the density meter is installed between a point where the second feed supply line (142) is connected to the solvent vessel discharge line (140) and a point where the third feed supply line (143) is connected to the solvent vessel discharge line (140), and the density meter is installed in the buffer vessel discharge line (210).

9. The solvent recirculation system of claim 1, wherein a thermometer and a pressure gauge are provided at a front end of a point where the feed supply line (141, 142, 143) located at the rearmost end in the solvent vessel discharge line (140) is connected, and measured values of the thermometer and the pressure gauge are transmitted to the calculation part.

10. The solvent recirculation system of claim 1, wherein a thermometer and a pressure gauge are provided in the buffer vessel discharge line (210), and measured values of the thermometer and the pressure gauge are transmitted to the calculation part.

11. The solvent recirculation system of claim 1, further comprising a heat exchanger provided between the point where the feed supply line (141, 142, 143) located at the rearmost end in the solvent vessel discharge line (140) is connected and the buffer vessel (200).

12. The solvent recirculation system of claim 1, wherein the calculation part receives the information on the measured values of the density meter and the mass flow meter and calculates the composition of the feed stream conveyed through the buffer vessel discharge line (210) using the equation of state and the mass balance.

**Patentansprüche**

1. Lösungsmittelrückführungssystem, umfassend:

eine Abgabeleitung (140) des Lösungsmittelbehälters, die ausgebildet ist, um einen aus dem Lösungsmittelbehälter (100) abgegebenen Lösungsmittelstrom zu fördern und den Lösungsmittelbehälter (100) und einen Pufferbehälter (200) zu verbinden;
eine Abgabeleitung (210) des Pufferbehälters, die ausgebildet ist, um einen aus dem Pufferbehälter (200) abgegebenen Zustrom zu fördern;

eine oder mehrere von Zuleitungen (141, 142, 143), die mit der Abgabeleitung (140) des Lösungsmittelbehälters verbunden sind;

ein Dichtemessgerät, das stromabwärts von einer Stelle bereitgestellt ist, an der eine oder mehreren der Zuleitungen (141, 142, 143) verbunden sind,

wobei jede der Zuleitungen (141, 142, 143) und die Abgabeleitung (210) des Pufferbehälters einen Massendurchflussmesser einschließt; und

eine Recheneinheit, die Informationen über Messwerte des Dichtemessgeräts und der Massendurchflussmesser empfängt und ausgebildet ist, unter Verwendung einer Zustandsgleichung und einer Massenbilanz eine Zusammensetzung des durch die Abgabeleitung (210) des Pufferbehälters geförderten Zustroms vorherzusagen.

2. Lösungsmittelrückführungssystem nach Anspruch 1, wobei zwei oder mehr Zuleitungen (141, 142, 143) mit der Abgabeleitung (140) des Lösungsmittelbehälters verbunden sind, und
das Dichtemessgerät an allen oder einem Teil der Abschnitte zwischen den Stellen, an denen die zwei oder mehr Zuleitungen (141, 142, 143) verbunden sind, und in der Abgabeleitung (210) des Pufferbehälters bereitgestellt ist.

3. Lösungsmittelrückführungssystem nach Anspruch 1, wobei der Lösungsmittelbehälter (100) eine oder mehrere von einer Rückführleitung für flüssiges Lösungsmittel (120) und einer Rückführleitung für gasförmiges Lösungsmittel (130) einschließt.

4. Lösungsmittelrückführungssystem nach Anspruch 1, wobei der Lösungsmittelbehälter (100) eine Zuleitung des Lösungsmittelbehälters (110) einschließt und die Zuleitung des Lösungsmittelbehälters (110) den Massendurchflussmesser einschließt.

5. Lösungsmittelrückführungssystem nach Anspruch 1, wobei der Lösungsmittelbehälter (100) ein Thermometer und ein Druckmessgerät einschließt.

6. Lösungsmittelrückführungssystem nach Anspruch 1, wobei das Dichtemessgerät, das stromabwärts von einer Stelle bereitgestellt ist, an der die Zuleitung (141, 142, 143), die unter der einen oder den mehreren der Zuleitungen (141, 142, 143) an einem hintersten Ende gelegen ist, verbunden ist, in der Abgabeleitung (210) des Pufferbehälters bereitgestellt ist.

7. Lösungsmittelrückführungssystem nach Anspruch 1, wobei die Abgabeleitung (140) des Lösungsmittelbehälters eine erste Zuleitung (141) und eine zweite Zuleitung (142) einschließt, und
das Dichtemessgerät zwischen einer Stelle, an der die erste Zuleitung (141) mit der Abgabeleitung (140) des Lösungsmittelbehälters verbunden ist, und einer Stelle, an der die zweite Zuleitung (142) mit der Abgabeleitung (140) des Lösungsmittelbehälters verbunden ist, installiert ist, und das Dichtemessgerät in der Abgabeleitung (210) des Pufferbehälters installiert ist.

8. Lösungsmittelrückführungssystem nach Anspruch 1, wobei die Abgabeleitung (140) des Lösungsmittelbehälters eine erste Zuleitung (141), eine zweite Zuleitung (142) und eine dritte Zuleitung (143) einschließt, und
das Dichtemessgerät zwischen einer Stelle, an der die erste Zuleitung (141) mit der Abgabeleitung (140) des Lösungsmittelbehälters verbunden ist, und einer Stelle, an der die zweite Zuleitung (142) mit der Abgabeleitung (140) des Lösungsmittelbehälters verbunden ist, installiert ist, das Dichtemessgerät zwischen einer Stelle, an der die zweite Zuleitung (142) mit der Abgabeleitung (140) des Lösungsmittelbehälters verbunden ist, und einer Stelle, an der die dritte Zuleitung (143) mit der Abgabeleitung (140) des Lösungsmittelbehälters verbunden ist, installiert ist, und das Dichtemessgerät in der Abgabeleitung (210) des Pufferbehälters installiert ist.

9. Lösungsmittelrückführungssystem nach Anspruch 1, wobei ein Thermometer und ein Druckmessgerät an einem vorderen Ende von einer Stelle bereitgestellt sind, an der die Zuleitung (141, 142, 143), die an einem hintersten Ende in der Abgabeleitung (140) des Lösungsmittelbehälters gelegen ist, verbunden ist, und Messwerte des Thermometers und des Druckmessgeräts an die Recheneinheit übertragen werden.

10. Lösungsmittelrückführungssystem nach Anspruch 1, wobei ein Thermometer und ein Druckmessgerät in der Abgabeleitung (210) des Pufferbehälters bereitgestellt sind, und Messwerte des Thermometers und des Druckmessgeräts an die Recheneinheit übertragen werden.

11. Lösungsmittelrückführungssystem nach Anspruch 1, weiter umfassend einen Wärmetauscher, der zwischen der

**EP 4 212 555 B1**

Stelle, an der die Zuleitung (141, 142, 143), die an einem hintersten Ende in der Abgabeleitung (140) des Lösungsmittelbehälters gelegen ist, verbunden ist, und dem Pufferbehälter (200) bereitgestellt ist.

12. Lösungsmittelrückführungssystem nach Anspruch 1, wobei die Recheneinheit die Informationen über die Messwerte des Dichtemessgeräts und des Massendurchflussmessers empfängt und die Zusammensetzung des durch die Abgabeleitung (210) des Pufferbehälters geförderten Zustroms unter Verwendung der Zustandsgleichung und der Massenbilanz berechnet.

**Revendications**

1. Système de recirculation de solvant comprenant :

   une conduite d'évacuation (140) de contenant de solvant configurée pour acheminer un flux de solvant évacué d'un contenant (100) de solvant et relier le contenant (100) de solvant et un contenant tampon (200) ;
   une conduite d'évacuation (210) de contenant tampon configurée pour acheminer un flux d'alimentation évacué du contenant tampon (200) ;
   une ou plusieurs de conduites d'alimentation (141, 142, 143) reliées à la conduite d'évacuation (140) de contenant de solvant ;
   un densimètre disposé en aval d'un point où sont reliées les une ou plusieurs des conduites d'alimentation (141, 142, 143),
   dans lequel chacune des conduites d'alimentation (141, 142, 143) et la conduite d'évacuation (210) de contenant tampon inclut un débitmètre massique ; et
   une partie de calcul recevant des informations sur des valeurs mesurées du densimètre et des débitmètres massiques et configurée pour prédire une composition du flux d'alimentation acheminé par le biais de la conduite d'évacuation (210) de contenant tampon en utilisant une équation d'état et un bilan massique.

2. Système de recirculation de solvant selon la revendication 1, dans lequel deux des conduites d'alimentation (141, 142, 143) ou plus sont reliées à la conduite d'évacuation (140) de contenant de solvant, et le densimètre est disposé au niveau de la totalité ou d'une partie des sections entre les points où sont reliées les deux conduites d'alimentation (141, 142, 143) ou plus et dans la conduite d'évacuation (210) de contenant tampon.

3. Système de recirculation de solvant selon la revendication 1, dans lequel le contenant (100) de solvant inclut une ou plusieurs d'une conduite de recirculation (120) de solvant liquide et d'une conduite de recirculation (130) de solvant gazeux.

4. Système de recirculation de solvant selon la revendication 1, dans lequel le contenant (100) de solvant inclut une conduite d'alimentation (110) de contenant de solvant et la conduite d'alimentation (110) de contenant de solvant inclut le débitmètre massique.

5. Système de recirculation de solvant selon la revendication 1, dans lequel le contenant (100) de solvant inclut un thermomètre et un manomètre.

6. Système de recirculation de solvant selon la revendication 1, dans lequel le densimètre disposé en aval d'un point où est reliée la conduite d'alimentation (141, 142, 143) située à une extrémité la plus en arrière parmi les une ou plusieurs des conduites d'alimentation (141, 142, 143) est disposé dans la conduite d'évacuation (210) de contenant tampon.

7. Système de recirculation de solvant selon la revendication 1, dans lequel la conduite d'évacuation (140) de contenant de solvant inclut une première conduite d'alimentation (141) et une deuxième conduite d'alimentation (142), et le densimètre est installé entre un point où la première conduite d'alimentation (141) est reliée à la conduite d'évacuation (140) de contenant de solvant et un point où la deuxième conduite d'alimentation (142) est reliée à la conduite d'évacuation (140) de contenant de solvant, et le densimètre est installé dans la conduite d'évacuation (210) de contenant tampon.

8. Système de recirculation de solvant selon la revendication 1, dans lequel la conduite d'évacuation (140) de contenant de solvant inclut une première conduite d'alimentation (141), une deuxième conduite d'alimentation (142) et une troisième conduite d'alimentation (143), et

14

le densimètre est installé entre un point où la première conduite d'alimentation (141) est reliée à la conduite d'évacuation (140) de contenant de solvant et un point où la deuxième conduite d'alimentation (142) est reliée à la conduite d'évacuation (140) de contenant de solvant,

le densimètre est installé entre un point où la deuxième conduite d'alimentation (142) est reliée à la conduite d'évacuation (140) de contenant de solvant et un point où la troisième conduite d'alimentation (143) est reliée à la conduite d'évacuation (140) de contenant de solvant, et le densimètre est installé dans la conduite d'évacuation (210) de contenant tampon.

9.  Système de recirculation de solvant selon la revendication 1, dans lequel un thermomètre et un manomètre sont disposés à une extrémité avant d'un point où est reliée la conduite d'alimentation (141, 142, 143) située à l'extrémité la plus en arrière dans la conduite d'évacuation (140) de contenant de solvant, et des valeurs mesurées du thermomètre et du manomètre sont transmises à la partie de calcul.

10. Système de recirculation de solvant selon la revendication 1, dans lequel un thermomètre et un manomètre sont disposés dans la conduite d'évacuation (210) de contenant tampon, et des valeurs mesurées du thermomètre et du manomètre sont transmises à la partie de calcul.

11. Système de recirculation de solvant selon la revendication 1, comprenant en outre un échangeur de chaleur disposé entre le point où est reliée la conduite d'alimentation (141, 142, 143) située à l'extrémité la plus en arrière dans la conduite d'évacuation (140) de contenant de solvant et le contenant tampon (200).

12. Système de recirculation de solvant selon la revendication 1, dans lequel la partie de calcul reçoit les informations sur les valeurs mesurées du densimètre et du débitmètre massique et calcule la composition du flux d'alimentation acheminé par l'intermédiaire de la conduite d'évacuation (210) de contenant tampon en utilisant l'équation d'état et le bilan massique.

【FIG. 1】

**EP 4 212 555 B1**

**Patent documents cited in the description**

- US 2016282251 A1